# EUROPÄISCHE PATENTSCHRIFT

(11) **EP 2 731 913 B1**
(45) Veröffentlichungstag und Bekanntmachung des Hinweises auf die Patenterteilung: **20.11.2019**
(21) Anmeldenummer: 12735811.7
(22) Anmeldetag: 27.06.2012
(51) Int. Cl.: C01G 23/047, B82Y 15/00, B82Y 30/00, C25D 1/02, C25D 11/26, C25D 5/48, C25D 5/50, G01N 27/12

(54) **VERFAHREN ZUR HERSTELLUNG VON p-HALBLEITENDEN TiO2-NANORÖHREN**
METHOD FOR PRODUCING P-TYPE SEMICONDUCTING TIO2 NANOTUBES
PROCÉDÉ DE FABRICATION DE NANOTUBES DE TIO2 SEMI CONDUCTEURS DE TYPE P

(30) Priorität: 06.07.2011 DE 102011106685
(43) Veröffentlichungstag der Anmeldung: 21.05.2014
(73) Patentinhaber: Deutsches Zentrum für Luft- und Raumfahrt e.V., 51147 Köln (DE)
(72) Erfinder: GÖNÜLLÜ, Yakup, 51103 Köln (DE); SARUHAN-BRINGS, Bilge, 53859 Niederkassel (DE); MONDRÁGON RODRIGUEZ, Guillermo César, 51147 Köln (DE)
(74) Vertreter: dompatent von Kreisler Selting Werner - Partnerschaft von Patent- und Rechtsanwälten mbB
(86) Internationale Anmeldenummer: PCT/EP2012/062423
(87) Internationale Veröffentlichungsnummer: WO 2013/004560

(56) Entgegenhaltungen:
- HUSSAIN, S.T.; SIDDIQA, A.: "Iron and chromium doped titanium dioxide nanotubes for the degradation of environmental and industrial polluants", INT. J. ENVIRON. SCI. TECH., Bd. 8, Nr. 2, 1. März 2011 (2011-03-01), Seiten 351-362, XP002683574, ISSN: 1735-1472
- DATABASE WPI Week 201127 Thomson Scientific, London, GB; AN 2011-A31997 XP002683575, & CN 101 899 701 A (UNIV SOUTHWEST CHINA JIAOTONG) 1. Dezember 2010 (2010-12-01)
- DATABASE WPI Week 200665 Thomson Scientific, London, GB; AN 2006-626927 XP002683576, & WO 2006/087841 A1 (UNIV OSAKA) 24. August 2006 (2006-08-24)
- GÖNÜLLÜ, Y.: "Effect of Doping at TiO2-Nanotubular Gas Sensors", SENSOR + TEST CONFERENCES 2011, [Online] 7. Juni 2011 (2011-06-07), - 9. Juni 2011 (2011-06-09), Seiten 551-553, XP002683577, Nürnberg DOI: 10.5162/sensor11/d2.4
- LI H ET AL: "Synthesis and characterization of copper ions surface-doped titanium dioxide nanotubes", MATERIALS RESEARCH BULLETIN, ELSEVIER, KIDLINGTON, GB, vol. 43, no. 8-9, 4 August 2008 (2008-08-04), pages 1971-1981, XP022717533, ISSN: 0025-5408, DOI: 10.1016/J.MATERRESBULL.2007.10.005 [retrieved on 2007-10-16]
- DATABASE WPI Week 201004 Thomson Scientific, London, GB; AN 2009-S25064 & CN 101 591 001 A (NORTHWEST INST NON-FERROUS METALS) 2 December 2009 (2009-12-02)

## Beschreibung

Die vorliegende Erfindung betrifft ein Verfahren zur Herstellung von p-halbleitenden TiO₂-Nanoröhren, die so erhaltenen Nanoröhren, sowie deren Verwendung als Elektrode eines Gassensors.

Im Bereich der Sensortechnik eröffnet die Nanotechnologie neue Optionen, die eine bislang nicht erreichte Sensitivität und Selektivität besitzen bzw. besitzen werden. Neben der fortschreitenden Miniaturisierung bereits etablierter Konzepte aus dem Bereich der Mikrosystemtechnik finden hierbei auch völlig neue Phänomene Eingang in die Forschung und Entwicklung.

Gassensoren benötigen hohe Materialoberflächen mit unterschiedlich komplexen chemischen Zusammensetzungen. Gassensoren, die eine Gasspezies in einem Gasgemisch selektiv detektieren sollen, kommen häufig bei hohen Temperaturen an ihre Grenzen. Neben der Sensitivität und stabilem Ansprechvermögen ist die geringe Querselektivität eine der wichtigsten Eigenschaften eines Gassensors.

Die Detektion von geringen Konzentrationen (<20 ppm) soll möglich sein. Darüber hinaus soll bei Gasgemischen, welche beispielsweise oxidierende und/oder reduzierende Gase, wie beispielsweise CO, O₂, NO₂ und NO aufweisen, ein einzelnes Gas selektiv detektiert werden.

Von der späteren möglichen Anwendung abhängig ist das Aufrechterhalten dieser Eigenschaften auch bei Temperaturen oberhalb 200°C, beispielsweise bei der Syngas- bzw. Abgas-Analyse.

Die Widerstandswerte von Sensoren werden bei Kontakt mit reduzierenden und oxidierenden Gasen reduziert bzw. erhöht. Bei der Detektierung eines einzelnen Gases eines Gasgemischs können bei nicht ausreichender Querselektivität des Sensors solche Messwerte erhalten werden, die durch Kompensierung der Werte der unterschiedlichen Gase untereinander zu unkorrekter Analyse führen. Daher wird eine geringe Querselektivität angestrebt, welche durch Einstellung der kristallographischen und chemischen Eigenschaften der Sensorelektrode und -Arrays erreicht werden kann.

Halbleiter und Übergangsmetalloxide, wie beispielsweise SnO₂, TiO₂ werden zur Analyse von NO, NO₂ und CO verwendet (D. Koziej et al.: Influence of annealing temperature on the CO sensing mechanism for in dioxide based sensors - Operando studies, Catalysis Today (2007) 211-218; X. Li et al.: Study of the resistance behavior of anatase und rutile thick films towards carbon monoxide and oxygen at high temperatures and possibilities for sensing applications, Sensors and Actuators B: Chemical (2009) 308-315). Die Sensitivität von SnO₂ durch Dotierung mit Pd bzw. mit Al kann gegenüber CO und NO₂ verbessert werden (N. Barsan, D. Koziej, U. Weimar: Metal oxide-based gas sensor research: How to?, Sens. Actuators B (2007) 18-35; M. Hübner et al.: BaTi0,95Rh0,05O3 catalytic filter layer - a promising candidate for the selective detection of CO in the presence of H2; Procedia Engineering (2010) 107-110). Die Dotierung von TiO₂ mit Cr oder Al erhöht die Sensitivität der Sensoren gegenüber NO₂ (Ruiz et al.: Cr-doped TiO2 gas sensor for exhaust NO2 monitoring, Sens. Actuators B (2003) 509-518; Y. Li et al.: Gas sensing properties of p-type semiconducting Cr thin films, Sens. Actuators B (2002) 160-163; Y. J. Choi et al.: Aluminumdoped TiO2 nano-powders for gas sensors; Sensors and Actuators B (2007) 111-117; DE 10144 900 B4, US 7,406,856 B2). Ein Überblick über unterschiedliche Sensoren geben N. Savage et al.: Composite n-p semiconducting titanium oxides as gas sensors, Sensors & Actuators (2001) 17-27, E. Comini et al.: Ti-W-O sputtered thin film as n- or p-type gas sensors, Sensors & Actuators B (2000), 108-114 und X. J. Huang, Y. K. Choi: Chemical sensors based on nanostructured materials, Sensors and Actuators B (2007) 659-671.

In den meisten Arbeiten konnte die Querselektivität zwischen NO₂ und CO bei der Verwendung dieser Sensoren nicht vermieden werden, insbesondere bei den Sensorelektroden, die mit Dünnschicht-(beispielsweise Sol-Gel, Vakuumbeschichtung) sowie Dickschichttechniken (beispielsweise Siebdruck-Verfahren) hergestellt sind. Zum Beispiel eine Dünnschichtsensorelektrode aus CrₓTi_{y}O_{z}, die aus zwei bis 500 nm dicken Cr- und Ti-Oxid-Schichten bestehen und durch Sputter- bzw. thermische Ausscheidungsverfahren hergestellt ist, detektiert bei 420°C neben NH₃ und H₂ auch CO durch die Erhöhung des Widerstandes und NO₂ durch Verringerung des Widerstandes. Neben der Querselektivität sind für die Messungen sehr lange Messzeiten von 2 bis 7 Stunden notwendig (DE 101 44 900 B4 und US 7,406,856 B2).

Die Anodisation von reinen Metallen oder Legierungen ist bekannt. Hieraus resultieren Nanoröhren, welche senkrecht zur anodisierten Oberfläche stehen. Solche nanotubularen Oberflächen stellen große, durchdringbare Flächen zur Absorption von Gasen dar. Aus CN 101748463 ist beispielsweise bekannt, Nanoröhren mit einem Durchmesser von 20 bis 200 nm und einer Länge von 100 nm bis 1 mm zu synthetisieren. Länge und Durchmesser können durch Einstellung der Anodisationsparameter kontrolliert werden.

Die Anodisation von reinen Ti-Folien führt zur Herstellung von defektfreien TiO₂-Nanoröhren (US 2005/0224360 A1, US 2010/0006134 A1). Wenn Legierungen von Ti, beispielsweise Ti-Mn, Ti-Al-V anodisiert werden, können Nanoröhren von Mischoxiden, beispielsweise (TiMn)O₂ hergestellt werden (US 2010/0320089 A1). Ebenfalls können Ni-Ti oxidischen Nanoröhren durch die Anodisation von Ni-Ti-FormGedächtnis-Legierungen synthetisiert werden (CN101775634 A).

Aus US 2010/0320089 A1 ist bekannt, dass die Oxid-Stöchiometrie der durch Anodisation erhaltenen Nanoröhren davon abhängt, wie gut die nicht-Titan-Metalle einen Mischkristall während der Anodisation mit Titan bilden können. Bei Titan und Mangan ist dies beispielsweise unproblematisch, so dass hier eine homogene Verteilung der (TiMn)O₂-Mischoxid-Zusammensetzung in der gesamten Struktur der Nanoröhren erreicht werden kann.

Es können unterschiedliche Legierungszusammensetzungen anodisiert werden. Die bevorzugten kommerziell erhältlichen Ti-Legierungen sind Ti-Mn, Ti-Nb, Ti-Zr, Ti-Si und Ti-Al-V. Es sollen hier homogene Legierungen vorliegen, aus welchen homogene Nanoröhren entstehen. Es hat sich jedoch gezeigt, dass die Herstellung homogener Ti-Si-Oxidischen Nanoröhren über dieses Verfahren nicht möglich ist (US 2010/0320089 A1).

Bei Metallen, die nicht oder nur schwer Mischkristalle mit Titan bilden, entstehen Nanoröhren, in denen verschiedenen Bereiche mit unterschiedlicher Zusammensetzung entstehen. Verwendet man beispielsweise eine Ti-Si-Legierung, so kommt es durch Anodisation nicht zur Ausbildung homogener (TiₓSi_{y})O_{z} Nanoröhren. Wenn die Ti-Si-Legierung anodisiert wird, haben die erhaltenen oxidischen Nanoröhren zwei Bereiche mit unterschiedlicher chemischer Zusammensetzung. Der obere Anteil (Kopf) der Nanoröhren besteht überwiegend aus TiO₂, während der untere Anteil (Fuß) überwiegend aus SiO₂ besteht.

Somit ist nach den aus dem Stand der Technik bekannten Verfahren die Zahl der Möglichkeiten zur Herstellung homogen dotierter TiO₂-Nanoröhren begrenzt.

Die in US 2005/0224360 A1 beschriebenen Nanorohrsensorelektroden eignen sich zur selektiven Detektierung von H₂. Aus Y. Gönüllü et al.: Nanotubular structuring of TiO2 electrodes improves the gas sensing performance towards NO2 and CO, eingereicht im Juli 2011 bei Sensors & Actuators, ist bekannt, dass auch undotierte TiO₂-Nanoröhren beziehungsweise daraus hergestellte Elektroden auch kleinere NO₂-Konzentrationen von weniger als 50 ppm in einem Temperaturbereich von 300 °C bis 400 °C detektieren. Diese Sensoren weisen jedoch eine deutliche Querselektivität auf, da deren Sensitivität gegenüber CO-Konzentrationen von <75 ppm höher ist und so bei der Detektierung von NO₂ eine höhere Querselektivität für CO vorliegt.

Ein Verfahren zur Herstellung dotierter Ti-Nanotubes beschreiben Hussain, S.T. und Siddiqa, A. (Iron and chromium doped titanium dioxide nanotubes for the degradation of environmental and industrial pollutants; Int. J. Environ. Sci. Tech, 2011, 8(2), 351-362), WO 2006/626927 A, Gönüllü Y. et al. (Effect of doping at TiO2-Nanotubular gas sensors; Sensor + test Conferences 2011, 7.6.2011-9.6.2011, 551-553), H. Li et al. (Synthesis and characterization of copper ions surfacedoped titanium dioxide nanotubes (Mat. Research Bulletin 43 (2008) 1971-1981), CN 101591001 A and CN 20101229642 A

Die Nachteile des Standes der Technik bestehen in hohen Kosten durch die Verwendung von komplex aufgebauten und teuren Materialien. Zudem ist häufig ein aufwendiges, mehrstufiges Verfahren zur Erreichung homogen dotierter TiO₂-Nanoröhren und damit hochqualitativer Elektroden notwendig.

Eine durchgehend homogene Zusammensetzung sowie eine stöchiometrische Homogenität von Nanoröhren sind bei der Verwendung als Sensorelektrode erwünscht. So kann die ganze vorhandene Oberfläche am Detektierungsprozess teilnehmen. Die effektive Wechselwirkung der gesamten Nanoröhrenoberfläche mit der zu analysierenden Gasmischung trägt zur sensorischen Funktion bei.

Nanoröhren können durch Anodisation von Metallen oder Legierungen hergestellt werden. Durch Verwendung spezieller Legierungen ist man auf vorhandene Zusammensetzungen beschränkt. Es lassen sich jedoch nur solche Legierungen verwenden, welche Mischkristalle bilden. Ist dies nicht der Fall, so entstehen keine homogenen Nanoröhren, wie weiter oben bereits ausgeführt.

Will man die Zusammensetzung einer Legierung eigenhändig herstellen, beispielsweise durch Lichtbogenschmelzen, sind noch vor dem Beginn der eigentlichen Herstellung der Nanoröhren zusätzliche hohe Prozesskosten notwendig. Außerdem bleibt auch hier die stöchiometrische Beschränkung aufgrund der eigenschränkten Mischkristallbildung. So ist beispielsweise in Hsu et al. (Structure and grindability of dental Ti-Cr alloys, Journal of Alloys and Compunds 476 (2009) 817-825) die Herstellung einer reinen Ti-Cr Legierung durch Vakuum-Lichtbogen-Schmelzen und einem anschließenden Gießverfahren beschrieben. Solche Legierungen werden beispielsweise in der Zahnmedizin verwendet, in der hohe Herstellungskosten tolerierbar sind. Weitere Informationen zur Herstellung Cr-haltiger TiO₂-Nanoröhren über Anodisation entsprechender Legierungen liegen nicht vor.

Um das Problem der hohen Querselektivität zu umgehen, werden die Sensoren mit unterschiedlichen Zellkombinationen und Sensorelektrodenmaterialien ausgebaut. So liefern sie eine zeitlich verzögerte und summierte Zustandsangabe. Hinzu kommt, dass lange Ansprech- und Regenerationszeiten gerade bei der Detektierung kleiner Konzentrationen hinderlich sind. Eine Analyse zur Unterscheidung beispielsweise von Edukten und Produkten ist nicht möglich.

Aufgabe der vorliegenden Erfindung ist somit die Bereitstellung eines Verfahrens, mit welchen TiO₂-Nanoröhren hergestellt werden können, welche als Gassensor Verwendung finden. Dies soll durch Dotierung der Nanoröhren erfolgen. Dabei soll es möglich sein, die Nanoröhren mit unterschiedlichen Metallen zu dotieren. Die Dotierung soll homogen über die gesamte Oberfläche der Nanoröhren erfolgen. Die Herstellung soll einfach und kostengünstig sein.

Die Wirkungsweise eines Gassensors beruht darauf, dass durch Kontakt des zu detektierenden Gases mit dem Sensor die Spannung je nach Art des Gases erhöht oder erniedrigt wird.

Die der vorliegenden Erfindung zugrunde liegende Aufgabe wird daher gelöst durch ein Verfahren zur Herstellung von p-halbleitenden TiO₂-Nanoröhren mit einer homogenen Dotierung, welches dadurch gekennzeichnet ist, dass man durch Anodisation von Titanoberflächen, in Form von Ti-Platten hergestellte ungeglühte TiO₂-Nanoröhren dotiert. Die Dotierung erfolgt dadurch, dass man die TiO₂-Nanoröhren mit einer wässrigen Lösung, welche metallische Ionen M aufweist, in Kontakt bringt. Anschließend werden die dotierten TiO₂-Nanoröhren geglüht.

Die Begriffe p-halbleitende TiO₂-Nanoröhren und dotierte TiO₂-Nanoröhren werden synonym verwendet.

Dotieren bezeichnet das Einbringen von Fremdionen in eine Schicht der TiO₂-Nanoröhren. Die an Fremdionen eingebrachte Menge ist dabei im Vergleich zum Trägermaterial klein. Die Fremdionen sind Störstellen im Trägermaterial und verändern gezielt dessen elektronische Eigenschaften. Bei der p-Dotierung werden Fremdionen implantiert, die als Elektronen-Akzeptoren dienen, welche also gegenüber Titan(IV) einen Elektronenmangel aufweisen.

Die in der wässrigen Lösung enthaltenen metallischen Ionen M dienen als Fremdionen, welche in die TiO₂-Nanoröhren eingebracht werden.

Ungeglühte TiO₂-Nanoröhren im Sinne der vorliegenden Erfindung bedeutet, dass die TiO₂-Nanoröhren nach deren Herstellung, also dem Anodisationsprozess, und vor dem Inkontaktbringen mit der wässrigen Lösung nicht geglüht wurden.

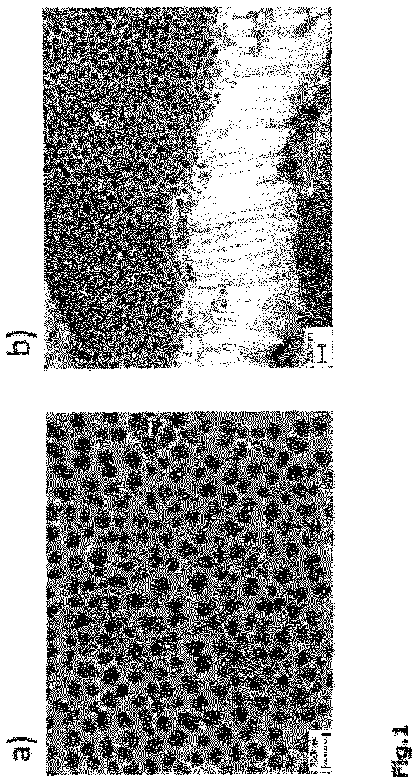

Die Herstellung reiner TiO₂-Nanoröhren durch Anodisation ist ein aus dem Stand der Technik bekanntes Verfahren. Fig. 1 zeigt Elektronenmikroskopiebilder einer Titanfolie nach Anodisation und anschließender Glühung bei 700°C. Fig. 1a zeigt eine Ansicht von oben. Hier ist die Röhrenform der TiO₂-Nanostrukturen sichtbar. Auch an einer Bruchkante, wie in Fig. 1b gezeigt, wird die Röhrenstruktur sowie eine regelmäßige Anordnung über einen großen Flächenbereich hinweg sichtbar.

Gemäß der vorliegenden Erfindung können TiO₂-Nanoröhren und die metallische Ionen M enthaltende wässrige Lösung auf jede beliebige Art und Weise miteinander in Kontakt gebracht werden. Bevorzugt werden die TiO₂-Nanoröhren in die Lösung eingetaucht.

Durch das Inkontaktbringen können die metallischen Ionen M, welche in der wässrigen Lösung enthalten sind, in die TiO₂-Nanoröhren diffundieren. In den Bereichen, in welchen die metallischen Ionen M diffundiert sind, findet dann der Einbau dieser Fremdionen in den TiO₂-Nanoröhren statt. Dieser Einbau ist nur möglich, wenn die TiO₂-Nanoröhren vor dem Inkontaktbringen mit der wässrigen Lösung nicht geglüht wurden. Der Aufbau der TiO₂-Nanoröhren findet über die Inwärts Diffusion von [TiF₆]⁺ entgegen der Aufwärtsdiffusion von Ti⁴⁺-Kationen an der Oberfläche des Ti-Substrats und deren Reaktion mit OH-Anionen statt. Es bilden sich daher während der Anodisation zunächst hydratisierte TiO₂-Nanoröhren aus. Durch das Glühen verfestigt sich durch Ausscheidung der OH-Gruppen die Struktur der TiO₂-Nanoröhren, Hierdurch wird die Diffusion erschwert und eine Dotierung ist nicht mehr möglich.

Um ein gleichmäßiges Inkontaktbringen zu ermöglichen werden die TiO₂-Nanoröhren mit einer wässrigen Lösung, welche die metallischen Ionen M aufweist, in Kontakt gebracht. Eine wässrige Lösung kann ins Innere der Nanoröhren eindringen und dort die Oberfläche homogen benetzen.

Es ist auch möglich, an Stelle der wässrigen Lösung ein Mischsol zu verwenden. Dieses kann beispielsweise auf der Basis von Titan-iso-Propoxid in Propanol und Acetylacetat mit einer wässrigen Chrom-Nitrat Lösung hergestellt werden. Bringt man nun die TiO₂-Nanoröhren mit einem solchen Mischsol in Kontakt, so dringt auch dieses ins Innere der Röhren ein. An der Innenwand der Nanoröhren bildet sich nun eine weitere Schicht aus, welche dotiertes TiO₂ aufweist. Hierdurch wird die Wanddicke der TiO₂-Nanoröhren deutlich erhöht. Deren Innendurchmesser wird klein. Verwendet man ein hoch-viskoses Mischsol, so können die Nanoröhren vollständig verschlossen werden. Die Oberfläche, an welcher Gase detektiert werden können, wird hierdurch deutlich verringert.

Arbeitet man im Gegensatz dazu mit einer wässrigen Lösung, welche die metallischen Ionen M aufweist, so ergibt sich keine Änderung in der Wanddicke der TiO₂-Nanoröhren. Man erhält einen homogen dotierten Oberflächenbereich, an dem eine Reaktion mit und somit eine Detektion von Gasen möglich ist.

Geeignete metallische Ionen M, welche zur Dotierung der TiO₂-Nanoröhren verwendet werden können, sind Al-, Y-, Cr-, Ga-, In-, Cu-, Mo-, V- oder Nb-Ionen oder Mischungen hiervon. Hieraus hergestellte Gassensoren weisen eine hohe Sensitivität bei gleichzeitig geringer Querselektivität auf. Besonders bevorzugt werden Cr-Ionen eingesetzt. Mit Cr³⁺ dotierte TiO₂-Nanoröhren eignen sich zur Detektion auch geringer Mengen an NO₂, während Gase, wie CO oder CO₂ nahezu nicht detektiert werden.

Die wässrige Lösung, welche die metallischen Ionen M aufweist, hat bevorzugt einen pH-Wert von 4 oder mehr. Bei einem geringeren pH-Wert kann die Struktur der TiO₂-Nanoröhren angegriffen werden. Hierdurch wird die Gitterstruktur zerstört und die Homogenität der Oberfläche der p-halbleitenden TiO₂-Nanoröhren kann nicht mehr sichergestellt werden.

Durch das Inkontaktbringen der TiO₂-Nanoröhren mit den metallischen Ionen M kommt es zu einem Austausch zwischen Titan(IV) und M. Hierfür müssen die Lösung, welche die metallischen Ionen M aufweist, über einen Zeitraum t mit den TiO₂-Nanoröhren in Kontakt sein. Während eines Zeitraums von 30 Minuten bis 5 Stunden, bevorzugt von 2 Stunden bis 4 Stunden kann eine ausreichende Diffusion stattfinden, um eine gleichmäßige Dotierung der TiO₂-Nanoröhren zu erreichen. Es ist weiterhin möglich, die TiO₂-Nanoröhren im Vakuum mit der Lösung in Kontakt zu bringen. Dies verbessert insbesondere den Kontakt zwischen der wässrigen Lösung und dem unteren Teil in der Nähe der Ti-Platte der TiO₂-Nanoröhren, da das Eindringen der Lösung in das Innere der Nanoröhren durch die Überwindung von Kapillarkräften erleichtert wird. Hierdurch wird das gleichmäßige Inkontaktbringen und damit eine homogene Dotierung erleichtert.

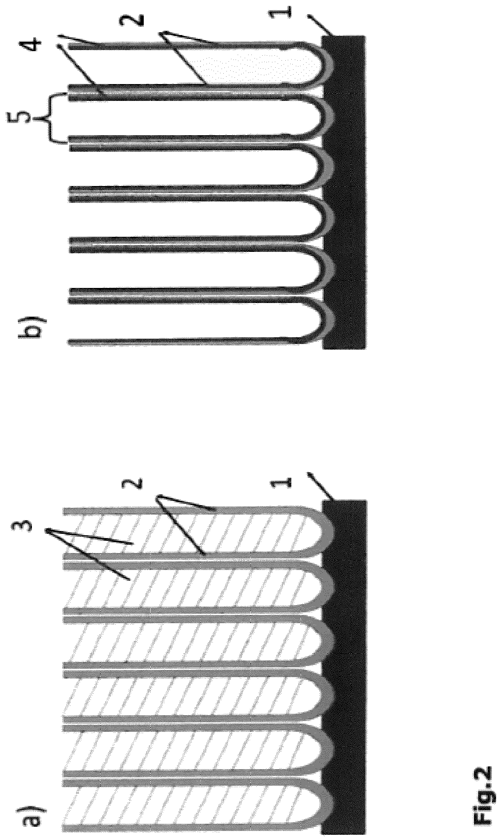

Nach dem Inkontaktbringen befindet sich im Inneren der TiO₂-Nanoröhren die wässrige Lösung. Fig. 2a zeigt dies schematisch. Auf einem Substrat aus Titan 1 befinden sich durch Anodisation hergestellte TiO₂-Nanoröhren 2. Die wässrige Lösung 3, welche metallische Ionen M aufweist, befindet sich im Inneren der TiO₂-Nanoröhren 2. Durch den Austausch von Titan(IV) gegen metallische Ionen M entsteht im Inneren der TiO₂-Nanoröhren 2 eine oxidische Schicht 4 der Zusammensetzung (MTi)O₂. Überschüssige Lösung 3 kann nach der Kontaktzeit wieder entfernt werden.

Die dotierten TiO₂-Nanoröhren 5 werden nach dem Inkontaktbringen und eventueller Entfernung überschüssiger wässriger Lösung 3 geglüht. Dies führt zu einer weiteren Diffusion der metallischen Ionen M ins Innere der noch undotierten TiO₂-Nanoröhren 2 und zur Stabilisierung der erhaltenen Mischoxidschicht 4.

Die p-halbleitenden TiO₂-Nanoröhren 5 werden nach dem Inkontaktbringen mit der wässrigen Lösung 3 bevorzugt bei einer Temperatur von >500°C, insbesondere von >700°C geglüht. Dies kann über einen Zeitraum von 30 bis 120 Minuten, insbesondere 60 Minuten erfolgen. Durch das Glühen verfestigt sich die Struktur der dotierten TiO₂-Nanoröhren 5. Hierdurch kann die Qualität der p-Dotierung verbessert werden. Dies kann eine verbesserte Sensitivität und Selektivität bei der Verwendung als Gassensor ermöglichen.

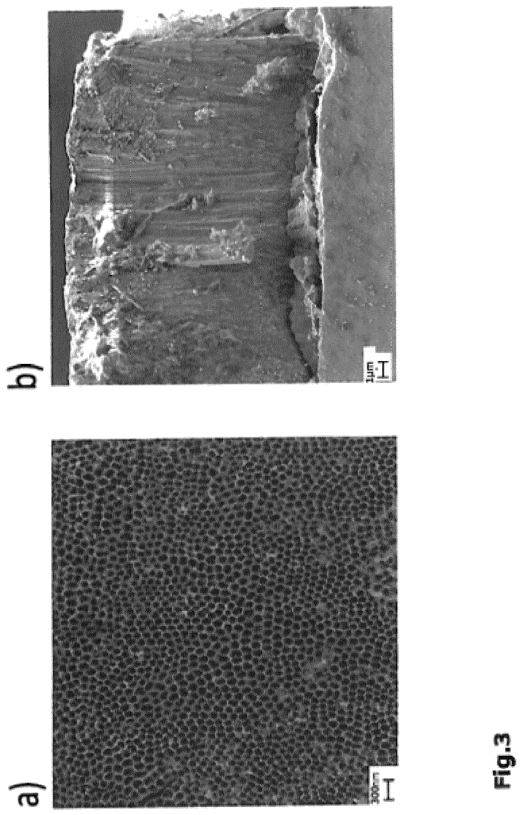

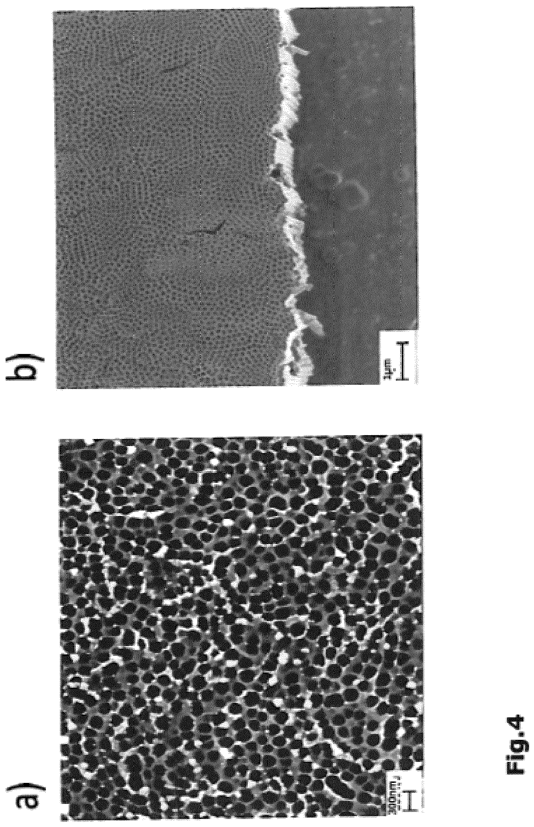

Durch den Glühvorgang werden die Nanoröhren nicht zerstört. Die tubulare Struktur ist weiterhin erhalten. Fig. 3a zeigt die Oberfläche im Rasterelektronenmikroskop nachdem TiO₂-Nanoröhren 5 in eine Cr³⁺ enthaltende Lösung getaucht und anschließend bei 450°C geglüht wurden. Fig. 3b zeigt eine Bruchfläche im Rasterelektronenmikroskop. Fig. 4a zeigt eine Elektronenmikroskopiebild von mit Cr³⁺ dotierten TiO₂-Nanoröhren 5, nachdem diese bei 700°C geglüht wurden. In Fig. 4b ist eine Bruchfläche im Rasterelektronenmikroskop dargestellt.

In beiden Fällen (Fig. 3 und 4) sind die Röhren senkrecht auf der Oberfläche angeordnet. Auch nach der Dotierung und dem Glühen bleibt die Struktur der Nanoröhren 5 erhalten.

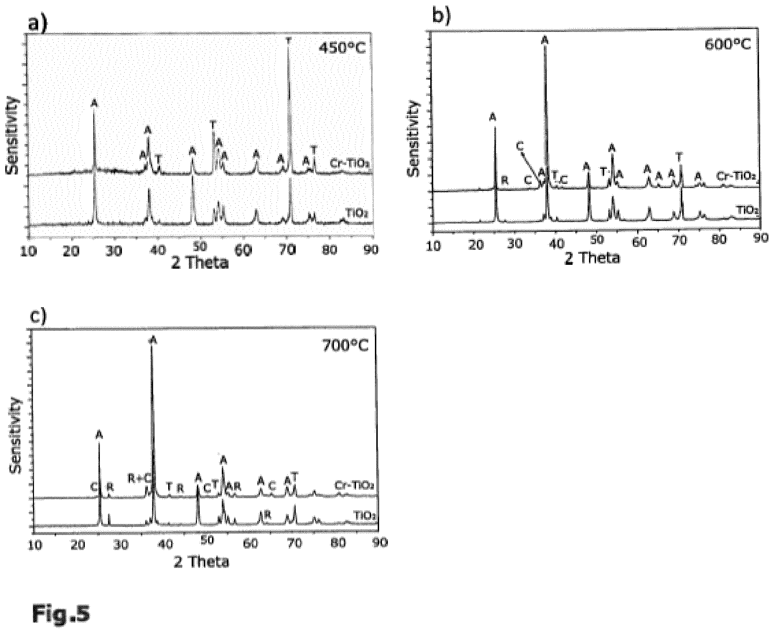

Den Einbau der metallische Ionen M kann durch XRD-Analyse nachvollzogen werden. Fig. 5 zeigt XRD-Spektren undotierter TiO₂-Nanoröhren 2 im Vergleich mit Cr³⁺ dotierten Nanoröhren 5. In jedem Spektrum sind zwei Linien dargestellt, wobei die untere Linie jeweils den undotierten TiO₂-Nanoröhren und die darüber dargestellte Linie den dotierten TiO₂-Nanoröhren entspricht. Die undotierten Nanoröhren 2 wurden im Anschluss an die Anodisation geglüht. Die dotierten Nanoröhren 5 wurden erfindungsgemäß erst nach der Dotierung geglüht. Das Spektrum in Fig. 5a zeigt TiO₂-Nanoröhren, welche bei 450 °C geglüht wurden. Fig. 5b zeigt das Spektrum nach Glühen bei 600 °C, Fig. 5c zeigt das Spektrum nach Glühen bei 700 °C.

Die durch Anodisation hergestellten TiO₂-Nanoröhren 2 weisen bevorzugt eine Länge im Bereich von 500 nm bis 50 µm, besonders bevorzugt 10 bis 15 µm auf. Der Außendurchmesser kann im Bereich von 70 nm bis 200 nm liegen, während der Innendurchmesser im Bereich von 50 nm bis 150 nm liegen kann. Besonders bevorzugt weisen die TiO₂-Nanoröhren 2 eine Länge im Bereich von 10 bis 15 µm auf. In diesem Längenbereich ist die Sensorwirkung der daraus hergestellten Elektroden am besten.

In einer weiteren Ausführungsform wird die der vorliegenden Erfindung zu Grunde liegende Aufgabe gelöst durch p-halbleitenden TiO₂-Nanoröhren 5, welche nach dem erfindungsgemäßen Verfahren hergestellt wurden. Diese können einen Dotierungsgrad mit M im Bereich von 5 bis 15 Atom-% aufweisen.

In einer weiteren Ausführungsform wird die der vorliegenden Erfindung zugrunde liegende Aufgabe gelöst durch einen Gassensor, welcher Elektroden aus p-halbleitenden TiO₂-Nanoröhren 5, erhalten nach dem erfindungsgemäßen Verfahren, aufweist. Durch die Dotierung der TiO₂-Nanoröhren gemäß dem erfindungsgemäßen Verfahren kann die Selektivität des Sensors gegenüber einzelnen Gasen erhöht werden. Weiterhin werden die Ansprech- und Regenerationszeit des Gassensors verkürzt.

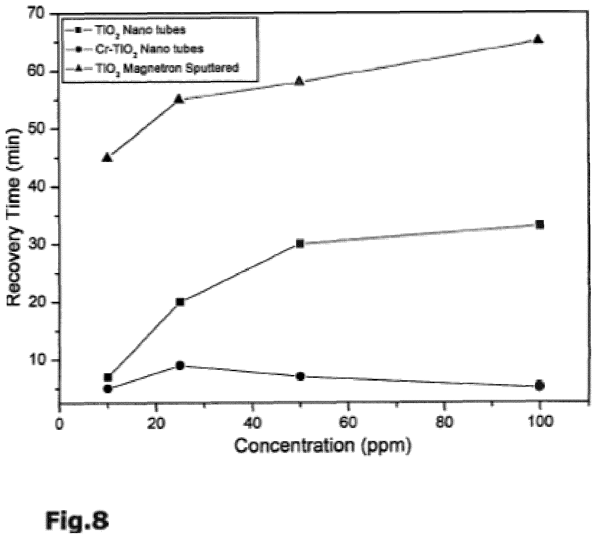

In Fig. 8 ist die Regenerationszeit dotierter 5 und undotierter 2 TiO₂-Nanoröhren gegenüber NO₂ bei einer Temperatur von 400°C dargestellt. Als weitere Referenz dient eine Magnetron-gesputterte TiO₂-Schicht. Die erfindungsgemäß hergestellten p-halbleitenden dotierten TiO₂-Nanoröhren können bereits nach wenigen Minuten (<5 Minuten) auch geringe Konzentrationen von 10ppm NO₂ detektieren. Die undotierten Nanoröhren 2 benötigen eine längere Regenerationszeit von annähernd 10 Minuten. Bei NO₂ Konzentrationen von 20 ppm oder mehr steigt die Regenerationszeit der undotierten Nanoröhren auf Zeiten von über 20 Minuten an. Im Gegensatz hierzu weisen die dotierten Nanoröhren 5 durchgehend eine geringe Regenerationszeit von unter 5 Minuten auf. Die gesputterte TiO₂-Schicht besitzt die längste Regenerationszeit von über 45 Minuten.

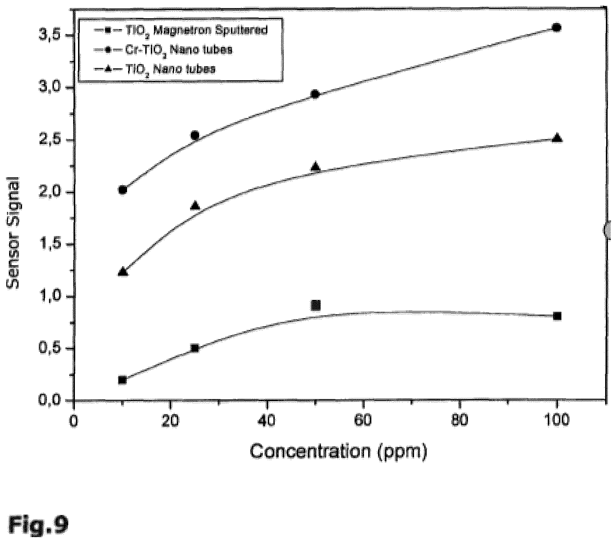

Durch die Verwendung der dotierten Nanoröhren 5 in einem Gassensor wird das erhaltene Signal verstärkt. Fig. 9 zeigt einen Vergleich der relativen Signalstärke verschiedener Gassensoren über welche unterschiedliche Konzentrationen an NO₂ bei einer Temperatur von 400 °C geleitet wurden. TiO₂ gesputterte Schichten zeigen nur ein schwaches Signal. Mit den undotierten TiO₂-Nanoröhren als Sensormaterial erhält man ein stärkeres Signal. Das stärkste Signal erhält man mit den erfindungsgemäß dotierten TiO₂-Nanoröhren 5.

Es können bereits geringe Gaskonzentrationen von weniger als 20 ppm auch bei höheren Temperaturen von über 200 °C, insbesondere von über 300 °C detektiert werden.

Die Dotierung mit Cr³⁺ führt beispielsweise zu einem Aufbau von p-halbleitenden TiO₂-Nanoröhren 5. Diese weisen eine hohe Selektivität gegenüber NO₂ auf. Üblicherweise besteht bei NO₂-Sensoren eine hohe Querselektivität mit CO. Ein erfindungsgemäßer Gassensor weist jedoch eine geringe Querselektivität auf, auch bei den zuvor genannten erhöhten Temperaturen.

Die dotierten nanostrukturierten Sensorelektroden erlauben unterschiedliche Sensordesigns, wie beispielsweise planare oder zylindrische Geometrien. Dabei können Innen- und Außenoberfläche unterschiedlich gestaltet sein. Die dotierten Sensorelektroden können ohne eine weitere isolierende Schicht auf Leiterbahnen aufgeklebt werden beziehungsweise die Leiterbahnen können auf die Elektroden durch Verwendung einer metallischen Maske abgeschieden oder aufgetragen werden. So hergestellte Sensorvorrichtungen benötigen keine Heizbänder an der Rückseite, um die Potenzialdifferenz zu bestimmen. Durch den einfachen Herstellungsweg sinken somit die Produktionskosten gegenüber aktuell bekannten Gassensoren.

Mögliche Einsatzbereiche eines erfindungsgemäßen Gassensors sind insbesondere die Mikrosystemtechnik, die Kontrolle von Emissionen bei Verbrennungsprozessen aber auch die Analyse der Atemluft beispielsweise bei Asthma-Patienten oder Astronauten. Dabei kann der Gassensor sowohl bei Raumtemperatur als auch bei erhöhten Temperaturbereichen verwendet werden.

### Ausführungsbeispiele

### Beispiel 1:

TiO₂-Nanoröhren wurden auf reiner Ti-Folie (99,6 %) durch Anodisation gewachsen. Die Titan-Folie hatte eine Dicke von 0,25 mm und wurde vorab spiegelblank poliert. Der Anodisationsprozess wurde einstufig in einer auf Ethylen-Glykol (EG)-basierenden Lösung bzw. Elektrolyt (98 vol.% EG, 2 vol.% H₂O und 0,3 wt.% NH₄F) unter Aufsetzung einer Anodisationsspannung von 60V durchgeführt. Die Gegenelektrode war eine Edelstahl-Platte. Der Abstand zwischen der Anode und Kathode lag konstant bei 20 mm. Die Anodisation wurde bei Raumtemperatur unter ständiger Rührung durchgeführt. Nach der Durchführung des Anodisationsprozesses wurde die Ti-Folie ausgewaschen und getrocknet.

Eine Cr³⁺-haltige Lösung wurde durch die Auflösung von Chrom-Nitrat in Wasser (Cr(III)(NO₃)₃·9H₂O) hergestellt. Chrom-Nitrat wurde genommen, da dies eine hohe Wasser-Löslichkeit aufweist. Zudem hat die wässerige Lösung des Chrom-Nitrats einen relativ hohen pH-Wert von etwa 4.

Für eine 0,1 mol Lösung wurden 2 g Chrom-Nitrat (Cr(III)(NO₃)₃·9H₂O) in 50 ml destillierten H₂O gelöst. Die TiO₂-Nanoröhren/Ti-Folie wurde in diese Lösung in einer Vakuumumgebung eingetaucht und drei Stunden gehalten. Anschließend wurde die Folie aus der Lösung entfernt und bei 450°C für eine Stunde geglüht.

### Beispiel 2

Mit Cr³⁺ dotierte TiO₂-Nanoröhren wurden nach der Dotierung bei 700 °C geglüht. Anschließend wurden sie als Sensor verwendet.

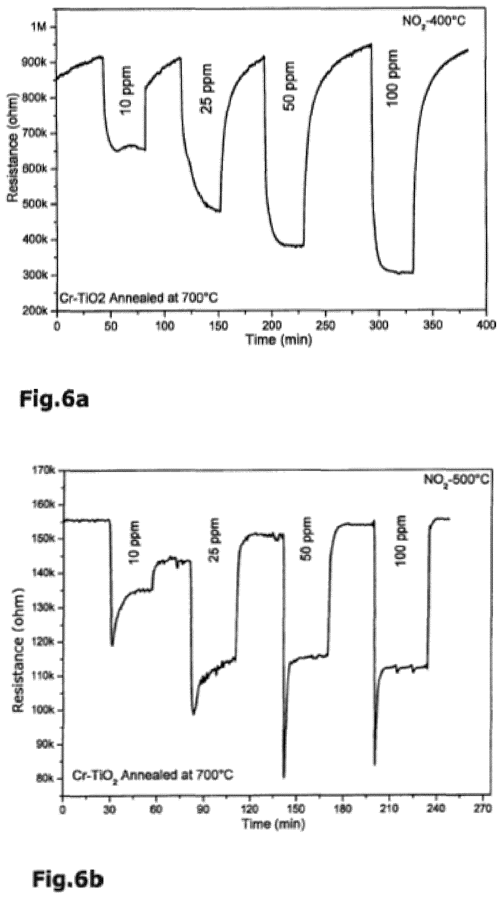

Bei einer Temperatur von 400 °C bzw. 500 °C wurde über den Sensor nacheinander 10 ppm, 25 ppm, 50 ppm und 100 ppm NO₂ geleitet. Als Trägergas wurde Argon verwendet. Der Gasdurchfluss lag bei 400 ml/cm³s. Fig. 6a zeigt das Spektrum bei 400 °C, die Messwerte bei 500 °C sind in Fig. 6b dargestellt.

Die Sensoren zeigen auch hier eine kurze Ansprech- und Regenerationszeit, wie in Fig. 8 gezeigt.

### Beispiel 3:

Chrom dotierte TiO₂-Nanoröhren wurden nach dem Inkontaktbringen bei 700 °C geglüht. Diese wurden als Sensorelektrode eingesetzt. Nacheinander wurden 25 ppm NO₂, 25 ppm CO, 25 ppm NO₂ + 25 ppm CO, 50 ppm NO₂, 50 ppm CO, 50 ppm NO₂ + 50 ppm CO bei einer Temperatur von 400 °C über die Elektrode geleitet. Als Trägergas wurde Argon verwendet. Der Gasdurchfluss lag bei 400 ml/cm³s.

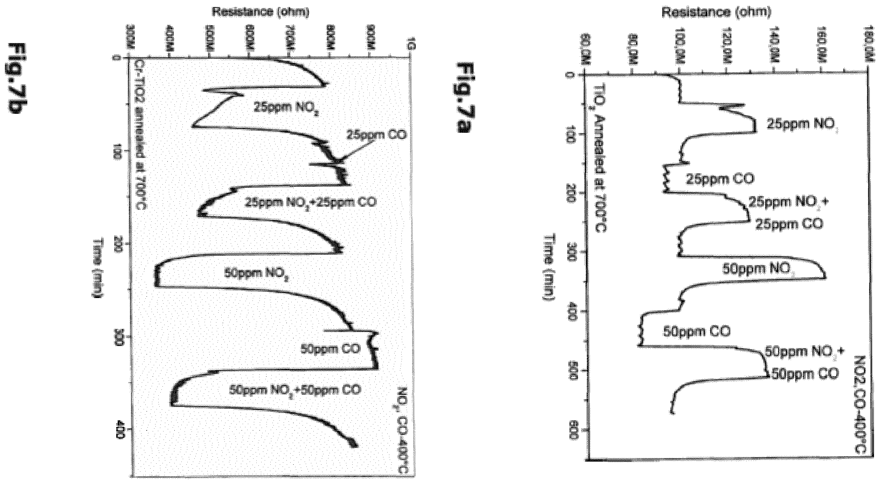

Fig. 7b zeigt das Sensorverhalten. Die nach dem erfindungsgemäßen Verfahren hergestellten dotierten TiO₂-Nanoröhren zeigten eine sehr geringe Querselektivität zwischen NO₂ und CO, auch bei einer Temperatur von 400 °C, bei der die Messung durchgeführt wurde.

### Vergleichsbeispiel 1

Das Vorgehen entsprach Beispiel 3. Als Sensorelektrode wurden jedoch undotierte TiO₂-Nanoröhren eingesetzt. Fig. 7a zeigt die Messwerte.

Man erhielt ein Spektrum, in welchem sich auf Grund einer nicht ausreichenden Querselektivität die Effekte des CO und NO₂ überlagern. Eine genaue Analyse war hier nicht möglich.

## Patentansprüche

1. Verfahren zur Herstellung von p-halbleitenden TiO₂-Nanoröhren (5) mit einer homogenen Dotierung, **dadurch gekennzeichnet, dass** man durch Anodisation von Ti-Platten (1) hergestellte ungeglühte TiO₂-Nanoröhren (2) dotiert, indem man sie mit einer wässrigen Lösung (3), welche metallische Ionen M zur Dotierung der TiO₂-Nanoröhren aufweist, in Kontakt bringt und anschließend glüht.

2. Verfahren nach Anspruch 1, **dadurch gekennzeichnet, dass** man die TiO₂-Nanoröhren (2) in die wässrige Lösung (3) eintaucht.

3. Verfahren nach Anspruch 1 oder 2, **dadurch gekennzeichnet, dass** man die wässrige Lösung (3) einsetzt, welche Al-, Y-, Cr-, Ga-, In-, Cu-, Mo-, V- oder Nb-Ionen oder Mischungen hiervon, insbesondere Cr-Ionen, enthält.

4. Verfahren nach einem der Ansprüche 1 bis 3, **dadurch gekennzeichnet, dass** man die wässrige Lösung (3) mit einem pH-Wert von 4 oder mehr einsetzt.

5. Verfahren nach einem der Ansprüche 1 bis 4, **dadurch gekennzeichnet, dass** man die TiO₂-Nanoröhren (2) 30 Minuten bis 5 Stunden, insbesondere 2 Stunden bis 4 Stunden mit der wässrigen Lösung (3) in Kontakt bringt.

6. Verfahren nach einem der Ansprüche 1 bis 5, **dadurch gekennzeichnet, dass** man die TiO₂-Nanoröhren (2) im Vakuum mit der wässrigen Lösung (3) in Kontakt bringt.

7. Verfahren nach einem der Ansprüche 1 bis 6, **dadurch gekennzeichnet, dass** man die dotierten TiO₂-Nanoröhren (5) nach dem Inkontaktbringen mit der wässrigen Lösung (3) bei einer Temperatur von >500°C, insbesondere von >700°C glüht.

8. Verfahren nach einem der Ansprüche 1 bis 7, **dadurch gekennzeichnet, dass** man die dotierten TiO₂-Nanoröhren (5) nach dem Inkontaktbringen mit der wässrigen Lösung (3) über einen Zeitraum von 30 Minuten bis 120 Minuten, insbesondere 60 min glüht.

9. Verfahren nach einem der Ansprüche 1 bis 8, **dadurch gekennzeichnet, dass** man TiO₂-Nanoröhren (2) mit einer Länge im Bereich von 500 nm bis 50 µm, bevorzugt 10 µm bis 15 µm, einem Außendurchmesser im Bereich von 70 nm bis 200 nm und einem Innendurchmesser im Bereich von 50 nm bis 150 nm einsetzt.

10. p-halbleitende TiO₂-Nanoröhren (5) mit einer homogenen Dotierung, erhalten nach einem Verfahren gemäß einem der Ansprüche 1 bis 9, **dadurch gekennzeichnet, dass** der Dotierungsgrad der TiO₂-Nanoröhren (5) 5 bis 15 Atom-% beträgt.

11. Gassensor, enthaltend Elektroden aus p-halbleitenden TiO₂-Nanoröhren (5) nach Anspruch 10.

## Claims

1. A process for preparing p-semiconducting TiO₂ nanotubes (5) having a homogeneous doping, **characterized in that** unannealed TiO₂ nanotubes (2) prepared by the anodization of Ti plates (1) are doped by contacting them with an aqueous solution (3) having metallic ions M for doping the TiO₂ nanotubes, followed by annealing.

2. The process according to claim 1, **characterized in that** said TiO₂ nanotubes (2) are immersed into said aqueous solution (3).

3. The process according to claim 1 or 2, **characterized in that** an aqueous solution (3) containing Al, Y, Cr, Ga, In, Cu, Mo, V or Nb ions or mixtures thereof, especially Cr ions, is employed.

4. The process according to any of claims 1 to 3, **characterized in that** an aqueous solution (3) having a pH value of 4 or more is employed.

5. The process according to any of claims 1 to 4, **characterized in that** said TiO₂ nanotubes (2) are contacted with said aqueous solution (3) for 30 minutes to 5 hours, especially for 2 hours to 4 hours.

6. The process according to any of claims 1 to 5, **characterized in that** said TiO₂ nanotubes (2) are contacted with said aqueous solution (3) under vacuum.

7. The process according to any of claims 1 to 6, **characterized in that** said doped TiO₂ nanotubes (5) are annealed at a temperature of > 500 °C, especially > 700 °C, after said contacting with the aqueous solution (3).

8. The process according to any of claims 1 to 7, **characterized in that** said doped TiO₂ nanotubes (5) are annealed for a duration of 30 minutes to 120 minutes, especially 60 min, after said contacting with the aqueous solution (3).

9. The process according to any of claims 1 to 8, **characterized in that** TiO₂ nanotubes (2) having a length within a range of from 500 nm to 50 µm, preferably from 10 µm to 15 µm, an outer diameter within a range of from 70 nm to 200 nm and an inner diameter within a range of from 50 nm to 150 nm are employed.

10. p-semiconducting TiO₂ nanotubes (5) having a homogeneous doping, obtained by a process according to any of claims 1 to 9, **characterized in that** the degree of doping of the TiO₂ nanotubes (5) is from 5 to 15 atomic percent.

11. A gas sensor containing electrodes made of p-semiconducting TiO₂ nanotubes (5) according to claim 10.

## Revendications

1. Procédé de fabrication de nanotubes de TiO₂ semi-conducteurs de type p (5) avec un dopage homogène, **caractérisé en ce que** l'on dope des nanotubes de TiO₂ non recuits (2), fabriqués par anodisation de plaques de Ti (1), **en ce qu'**ils sont mis en contact avec une solution aqueuse (3) qui présente des ions métalliques M pour le dopage des nanotubes de TiO₂, et ensuite recuits.

2. Procédé selon la revendication 1, **caractérisé en ce que** l'on plonge les nanotubes de TiO₂ (2) dans la solution aqueuse (3).

3. Procédé selon la revendication 1 ou 2, **caractérisé en ce que** l'on utilise la solution aqueuse (3) qui contient des ions Al, Y, Cr, Ga, In, Cu, Mo, V ou Nb ou des mélanges de ceux-ci, en particulier des ions Cr.

4. Procédé selon l'une des revendications 1 à 3, **caractérisé en ce que** l'on utilise la solution aqueuse (3) présentant un pH de 4 ou plus.

5. Procédé selon l'une des revendications 1 à 4, **caractérisé en ce que** l'on met les nanotubes de TiO₂ (2) en contact pendant 30 minutes à 5 heures, en particulier 2 heures à 4 heures, avec la solution aqueuse (3).

6. Procédé selon l'une des revendications 1 à 5, **caractérisé en ce que** l'on met les nanotubes de TiO₂ (2) en contact sous vide avec la solution aqueuse (3).

7. Procédé selon l'une des revendications 1 à 6, **caractérisé en ce que** l'on recuit les nanotubes de TiO₂ dopés (5) après la mise en contact avec la solution aqueuse (3) à une température > 500 °C, en particulier > 700 °C.

8. Procédé selon l'une des revendications 1 à 7, **caractérisé en ce que** l'on recuit les nanotubes de TiO₂ dopés (5) après la mise en contact avec la solution aqueuse (3) sur une période de 30 minutes à 120 minutes, en particulier de 60 min.

9. Procédé selon l'une des revendications 1 à 8, **caractérisé en ce que** l'on utilise des nanotubes de TiO₂ (2) d'une longueur dans la gamme de 500 nm à 50 µm, de préférence de 10 µm à 15 µm, d'un diamètre extérieur dans la gamme de 70 nm à 200 nm, et d'un diamètre intérieur dans la gamme de 50 nm à 150 nm.

10. Nanotubes de TiO₂ semi-conducteurs de type p (5) avec un dopage homogène, obtenus selon un procédé selon l'une des revendications 1 à 9, **caractérisés en ce que** la densité des atomes dopants des nanotubes de TiO₂ (5) est de 5 à 15 % en atomes.

11. Capteur de gaz, contenant des électrodes en nanotubes de TiO₂ semi-conducteurs de type p (5) selon la revendication 10.
